# EUROPEAN PATENT SPECIFICATION

(11) **EP 0 207 997 B1**
(45) Date of publication and mention of the grant of the patent: **29.09.1993**
(21) Application number: 86900281.6
(22) Date of filing: 26.12.1985
(51) Int. Cl.: G05B 19/407

(54) **SYSTEM FOR CORRECTING ERROR IN THE PATH OF A ROBOT**
FEHLERKORREKTUR IM WEGE EINES ROBOTERS
SYSTEME DE CORRECTION D'ERREURS DANS LE CHEMINEMENT D'UN ROBOT

(30) Priority: 29.12.1984 JP 2783/85
(43) Date of publication of application: 14.01.1987
(73) Proprietor: FANUC LTD., Minamitsuru-gun, Yamanashi 401-05 (JP)
(72) Inventor: KISHI, Hajimu, 6-chome Hino-shi Tokyo 191 (JP); SAKAKIBARA, Shinsuke, Komae-shi Tokyo 201 (JP); ITO, Takayuki, Hino-shi Tokyo 191 (JP); KARAKAMA, Tatsuo, Hino-shi Tokyo 191 (JP)
(74) Representative: Billington, Lawrence Emlyn
(86) International application number: PCT/JP85/00724
(87) International publication number: WO 86/04162

(56) References cited:
- GB-A- 1 189 959
- JP-A- 5 433 984
- JP-A-53 148 677
- JP-A-55 118 107
- PATENT ABSTRACTS OF JAPAN,vol. 8, no. 137 (P-282)(1574)26 June 1984;& JP-A-59 36811

## Description

This invention relates to a robot drive control system for controlling the path of motion of a driven element, for example the movable element of a machine tool or the hand of a robot the acceleration and deceleration of which is controlled.

In a control system for controlling the axial movement of a machine tool or robot, the conventional practice generally is to effect acceleration and deceleration in such a manner that the control system will not be subjected to shock or vibration at the start of axial movement and at deceleration. One example of such an acceleration/deceleration control method is to exponentially accelerate or decelerate the supply rate of pulses generated to correspond to the axially traveled distance.

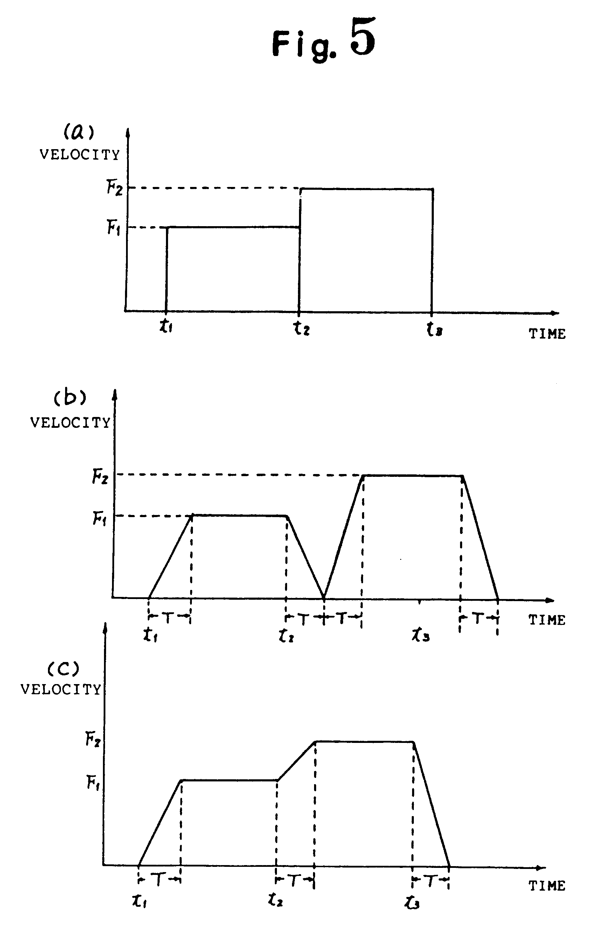

Figs. 5(a), (b), (c) are views illustrating drive states for a case in which two different velocity commands are programmed in succession. Time is plotted along the horizontal axis and velocity along the vertical axis. Fig. 5(a) illustrates a commanded velocity F1 from time t₁ to time t₂ for movement from a coordinate point P1 to a commanded position P2, and a commanded velocity F2 from time t₂ to time t₃ for movement to a next commanded point P3. In actuality, however, when effecting movement to the commanded position P3 via the commanded position P2, a delay 2T is involved, as shown in Fig. 5(b), where T is the time needed for acceleration and deceleration.

The reason for this is to carry out velocity control in such a manner that the control system will not be subjected to shock or vibration when starting and stopping movement in a case where axial movement of a machine tool or robot is controlled.

A method utilized to reduce this delay time is to ignore positioning at the intermediate commanded position P2 and effect acceleration up to the next commanded velocity F2 without performing deceleration at time t₂. As shown in Fig. 5(c), this entails performing a pulse distribution calculation along each axis corresponding to the commanded position P3 based on velocity command pulses for accelerating a feed rate up to the commanded velocity F2 at time t₂, which is the start of deceleration, and gradually driving the movable element in the designated direction. In accordance with this method, the resulting delay time is T. Moreover, by changing the commanded velocity, the robot trajectory can be made to approach a desired path.

Codes indicating these control functions are referred to as G11 and G12 and are used in an automatic acceleration/deceleration function, interpolation function and the like, as well as in the drive and control of machine tools. However, since the size of an arc described by the trajectory of the movable element changes whenever the commanded velocity changes, a system that controls the path of the movable element by such control codes requires the creation of a complicated program in order to reduce the path error of the robot.

Examples in the prior art of drive control systems for controlling the path of motion of a driven element between a plurality of commanded positions, are provided by GB-A-1 189 959 and US-A-4 348 731. Each of these documents discloses that the driven element passes precisely through all the commanded positions, whereas the drive control system of the present invention is one in which an intermediate commanded position can be somewhat by-passed in order to reduce delay time.

According to the present invention there is provided a robot drive control system for controlling the path of motion of a driven element between a plurality of commanded positions, the drive control system being operable to perform a drive pulse distribution calculation along each axis of motion of said driven element in dependence upon velocity command pulses which have been processed by an acceleration/deceleration circuit for accelerating and decelerating the drive pulses thereby to achieve a commanded velocity for the driven element within a predetermined time,
characterised by:
(a) pulse detecting means for detecting the number of command pulses remaining to decelerate the driven element to its next commanded position, at an instant when the driven element starts to decelerate towards this next commanded position;
(b) timing deciding means for specifying the time of the start of a pulse distribution calculation to produce motion of the driven element towards the commanded position following said next commanded position, this start time being decided by the timing deciding means in dependence upon said number of command pulses remaining at said deceleration start instant; and
(c) adding means for adding together, from said start time, the number of command pulses to said next commanded position remaining from said start time, and the command pulses which are to accelerate the driven element towards said commanded position following said next commanded position;
   wherein said timing deciding means is operable to specify said time as the instant when a predeterminable proportion a still remains of said number of command pulses remaining at said deceleration start instant.

An object of the present invention is to provide a drive control system for controlling the path of motion of a driven element between a plurality of commanded positions which reduces delay time at acceleration and deceleration when controlling the axial movement of a machine tool or robot, and which enables a robot trajectory to approach a desired path with ease irrespective of the designated velocity.

The drive control system of the present invention decides a timing for transition to acceleration control based on a velocity command to the next commanded position in dependence upon the number of pulses remaining for deceleration of the feedrate, and makes the transition to acceleration control by appropriately cutting deceleration time. As a result, delay time can be set to a small value and the robot trajectory can be made to approach a desired path with ease irrespective of the commanded velocity.

### Brief Description of the Drawings

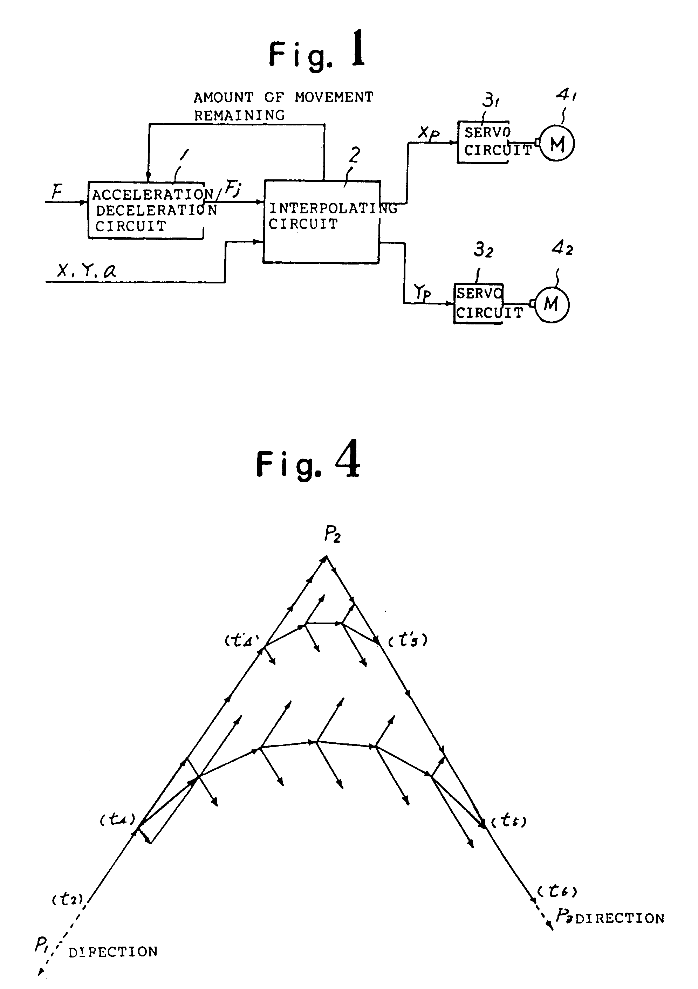

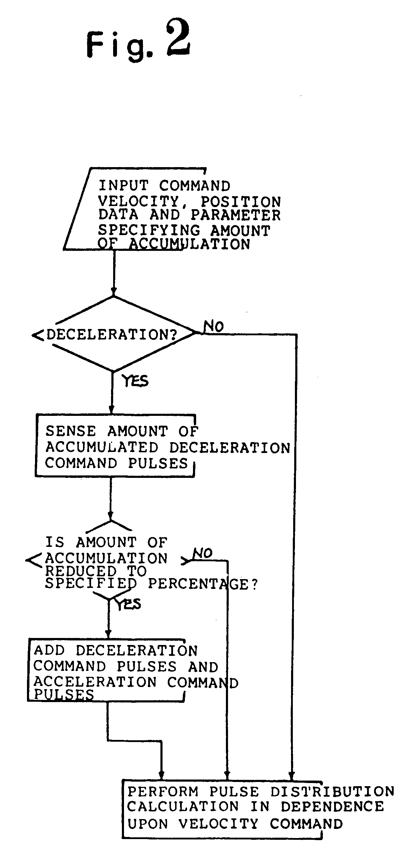

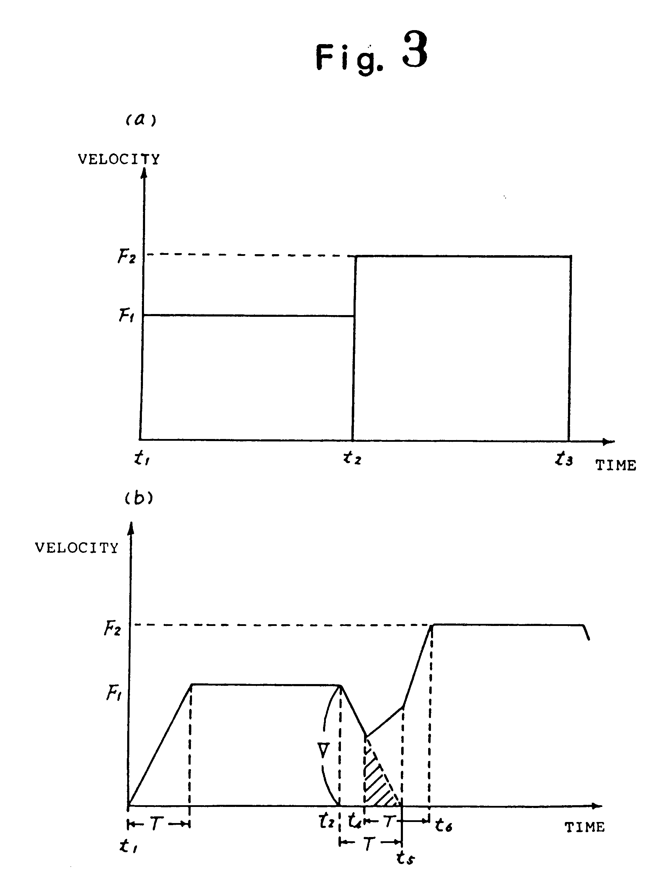

Fig. 1 is a block diagram illustrating an embodiment of the system of the present invention, Fig. 2 is a flowchart illustrating the operation of an interpolating circuit used in the system of Fig. 1, Fig. 3 is an explanatory view of characteristics illustrating an embodiment of a velocity control system according to the present invention, Fig. 4 is a view showing trajectories in the same embodiment, and Fig. 5 is an explanatory view of characteristics according to a conventional velocity control system.

The present invention will now be described in detail based on an embodiment illustrated in the drawings.

Fig. 1 is a block diagram illustrating an embodiment of the system of the present invention, wherein input drive pulses F are converted to drive pulses Xp, Yp. In the Figure, numeral 1 denotes an accelerator/decelerator circuit for accelerating and decelerating feedrate to a commanded velocity within a predetermined time and consisting of a register, accumulator, adder and the like. The accelerator/decelerator circuit 1 begins deceleration when a deceleration distance dependent upon feedrate becomes equal to an amount of movement remaining to be made, which is fed back from an interpolating circuit, described below. The interpolating circuit 2 generates distributed pulses Xp, Yp by performing a pulse distribution calculation, which is based on data indicative of amount of movement, whenever the accelerator/decelerator circuit 1 generates an output pulse Fj. The distributed pulses Yp, Yp drive respective servomotors 4₁' 4₂ via servo circuits 3₁' 3₂. The interpolating circuit 2 senses a remaining number of accumulated command pulses at the start of deceleration, designates start timing of a pulse distribution calculation along the next traveling path from said sensed number of command pulses remaining and a parameter a specifying a proportion of said remaining accumulated number, and adds command pulses which accelerate the feedrate and command pulses for deceleration in accordance with a commanded velocity F and a commanded position.

Fig. 2 is a flowchart indicating the procedure of the pulse distribution calculation performed in the interpolating circuit 2.

Next, an embodiment of acceleration/deceleration control in accordance with the system of the present invention will be described with reference to Figs. 3 and 4.

Figs. 3(a), (b) illustrate examples of linear acceleration/deceleration control, in which the rate at which a drive pulse signal is supplied is plotted along the vertical axis and time is plotted along the horizontal axis.

In Fig. 3(a), in which two different velocity commands are programmed in succession, F1 indicates a commanded velocity from time t₁ to time t₂ for movement from a coordinate point P1 to a commanded position P2, and F2 indicates a commanded velocity from time t₂ to time t₃ for movement to a next commanded point P3. The interpolating circuit 2 decides the pulse distribution start timing by specifying e.g. 40% as a parameter a for multiplying an accumulated number of command pulses at the start of deceleration from velocity F1. The actual trajectory for movement to the commanded position P3, where the acceleration and deceleration time period is T, slants gradually in the direction of the commanded position P3 short of the commanded position P2 without traversing this point, as shown for example in Fig. 4.

Fig. 3(b) illustrates the state of change in velocity at a portion where the deceleration time T and acceleration time T overlap. Specifically, the movable element starts to be decelerated at time t₂. At time t₄, which is when the number of remaining command pulses becomes 40% of the number of accumulated command pulses at deceleration start time t₂, the next pulse distribution calculation is started, the command pulses for acceleration based on the commanded velocity F2 are added, and the movable element is accelerated.

Though the pulse distribution calculation start timing along the next travel path is decided upon setting the number of accumulated pulses S of the shaded portion in Fig. 3(b) as follows:

$\text{S = (1/2)} {\text{a}}_{̲} \text{VT (where V: axial velocity)}$

this can be calculated for each axis.

Fig. 4 illustrates trajectories in the form of position vectors at each and every sampling time of the interpolating circuit 2 for a case where there are two specified parameters a, namely large and small. Specifically, if the parameter a is large, the movable element on a path from the coordinate point P1 to the commanded position P2 starts to be decelerated at time t₂, and a timing decided by the paramater a of, e.g. 80%, which specifies the number of pulses remaining at time t4, is sensed. From this time onward, the position vector from the coordinate point P2 to the commanded position P3 is successively added to the position vector pointing towards the commanded position P2 while deceleration is being performed. At time t₅, this path reaches a straight line connecting P2 and P3. In a case where the specified parameter a is smaller than the above (about 30%), addition of the position vectors takes place between time t₄' and time t₅', and the trajectory forms an arcuate shape near the commanded position P2.

If the specified parameter a is set to 0, the trajectory can be made to coincide with the trajectory of G11, shown in Fig. 5(b), that passes through the commanded position P2. If the parameter a is set to 100, the trajectory can be made to coincide with the trajectory described by G12 of Fig. 5(c).

Thus, with the above-described embodiment, the amount of remaining deceleration command pulses at the end of deceleration is specified as a percentage of that at the start of deceleration so that the size of the circular arc of the trajectory can be determined at will. This makes it possible to easily correct a path error.

Though the present invention has been described based on an embodiment, the invention is not limited to the embodiment. The size of a circular arc can be determined by various methods in dependence upon the sensed number of remaining command pulses, and a transition to acceleration control can be made smoothly by cutting the deceleration time of the movable element.

The present invention is effective when applied to an industrial robot, and is very useful when applied to a robot having many articulations. The invention is not limited to robots but is also useful when applied to the servo circuits of machine tools controlled by a numerical control unit.

## Claims

1. A robot drive control system for controlling the path of motion of a driven element between a plurality of commanded positions (P1,P2,P3), the drive control system being operable to perform a drive pulse distribution calculation along each axis of motion of said driven element in dependence upon velocity command pulses (Fj) which have been processed by an acceleration/deceleration circuit (1) for accelerating and decelerating the drive pulses thereby to achieve a commanded velocity for the driven element within a predetermined time (T),
characterised by:
(a) pulse detecting means (2) for detecting the number of command pulses remaining to decelerate the driven element to its next commanded position (P2), at an instant (t₂) when the driven element starts to decelerate towards this next commanded position (P2);
(b) timing deciding means (2) for specifying the time (t₄) of the start of a pulse distribution calculation to produce motion of the driven element towards the commanded position (P3) following said next commanded position (P2), this start time (t₄) being decided by the timing deciding means (2) in dependence upon said number of command pulses remaining at said deceleration start instant (t₂); and
(c) adding means (2) for adding together, from said start time (t₄), the number of command pulses to said next commanded position (P2) remaining from said start time (t₄), and the command pulses which are to accelerate the driven element towards said commanded position (P3) following said next commanded position (P2);
wherein said timing deciding means (2) is operable to specify said time (t₄) as the instant when a predeterminable proportion (a) still remains of said number of command pulses remaining at said deceleration start instant (t₂).

## Patentansprüche

1. Roboter-Antriebssteuersystem zum Steuern des Weges der Bewegung eines angetriebenen Elements zwischen einer Vielzahl von befohlenen Positionen (P1, P2, P3), wobei das Antriebssteuersystem betreibbar ist, um eine Antriebsimpulsverteilungs-Berechnung längs jeder Achse der Bewegung des angetriebenen Elements in Abhängigkeit von Geschwindigkeits-Befehlsimpulsen (Fj) durchzuführen, die durch eine Beschleunigungs/Verzögerungs-Schaltung (1) zum Beschleunigen und Verzögern der Antriebsimpulse verarbeitet worden sind, um dadurch eine befohlene Geschwindigkeit für das angetriebene Element innerhalb einer vorbestimmten Zeit (T) zu erzielen,
**gekennzeichnet** durch
(a) ein Impulserfassungsmittel (2) zum Erfassen der Anzahl von Befehlsimpulsen, die verbleiben, um das angetriebene Element bis zum Erreichen seiner nächsten befohlenen Position (P2) zu verzögern, und zwar zu einem Zeitpunkt (t₂), zu dem das angetriebene Element beginnt, sich in Richtung auf diese nächste befohlene Position (P2) zu verzögern,
(b) ein Zeitbestimmungsmittel (2) zum Angeben des Zeitpunkts (t₄) des Beginns einer Impulsverteilungs-Berechnung, um eine Bewegung des angetriebenen Elements in Richtung auf die befohlene Position (P3) zu erzeugen, die der nächsten befohlenen Position (P2) folgt, wobei dieser Beginn-Zeitpunkt (t₄) durch das Zeitbestimmungsmittel (2) in Abhängigkeit von der Anzahl von Befehlsimpulsen bestimmt wird, die zu dem Verzögerungsbeginn-Zeitpunkt (t₂) verbleibt, und
(c) ein Addiermittel (2) zum Addieren von dem Beginn-Zeitpunkt (t₄) aus die Abzahl der Befehlsimpulse, die von dem Beginn-Zeitpunkt (t₄) aus verbleibt, zum Erreichen der nächsten befohlenen Position (P2), und die Anzahl der Befehlsimpulse, die zum Beschleunigen des angetriebenen Elements in Richtung auf die befohlene Position (P3) dienen, welche der nächsten befohlenen Position (P2) folgt,
wobei das Zeitbestimmungsmittel (2) betreibbar ist, um den Zeitpunkt (t₄) als den Augenblick zu bestimmen, zu dem noch ein vorherbestimmbares Verhältnis (a) aus der Anzahl von befohlenen Impulsen verbleibt, die bei dem Verzögerungsbeginn-Zeitpunkt (t₂) verbleiben.

## Revendications

1. Un système de contrôle d'entraînement d'un robot pour contrôler le trajet de déplacement d'un élément entraîné entre un ensemble de positions commandées (P1, P2, P3), le système de contrôle d'entraînement étant actionnable pour effectuer un calcul de répartition des impulsions d'entraînement le long de chaque axe de déplacement dudit élément entraîné en dépendance d'impulsions de commande de vitesse (Fj) qui ont été traitées par un circuit d'accélération/décélération (1) pour accélérer et décélérer les impulsions d'entraînement afin d'obtenir une vitesse commandée pour l'élément entrainé pendant un temps prédéterminé (T),
caractérisé par :
(a) des moyens de détection d'impulsions (2) pour détecter le nombre des impulsions de commande restantes afin de décélérer l'élément entrainé à sa position commandée suivante (P2), à un instant (t2) où l'élément entrainé commence à décélérer vers sa position commandée suivante (P2) ;
(b) des moyens de décision temporelle (2) pour spécifier le temps (t4) du début d'un calcul de répartition d'impulsions afin de produire un déplacement de l'élément entraîné vers la position commandée (P3) après ladite position commandée suivante (P2), ce temps de début (t4) étant déterminé par les moyens de décision temporelle (2) en dépendance dudit nombre d'impulsions de commande restantes audit instant de début de décélération (t2) ; et
(c) des moyens d'addition (2) pour ajouter ensemble, à partir dudit temps de début (t4), le nombre d'impulsions de commande à ladite position commandée suivante (P2) restant à partir dudit temps de début (t4), et les impulsions de commande qui doivent accélérer l'élément entrainé vers ladite position commandée (P3) après ladite position commandée suivante (P2) ;
dans lequel lesdits moyens de décision temporelle (2) sont actionnables pour spécifier ledit temps (t4) comme l'instant où une proportion déterminable à l'avance (a) reste encore parmi ledit nombre des impulsions de commande restantes audit instant de début de décélération (t2).
